# EUROPÄISCHE PATENTSCHRIFT

(11) **EP 1 507 694 B1**
(45) Veröffentlichungstag und Bekanntmachung des Hinweises auf die Patenterteilung: **05.10.2005**
(21) Anmeldenummer: 03752662.1
(22) Anmeldetag: 26.04.2003
(51) Int. Cl.: B62D 3/12

(54) **ZAHNSTANGENLENKGETRIEBE**
RACK-AND-PINION STEERING GEAR
DIRECTION A CREMAILLERE

(30) Priorität: 18.05.2002 DE 10222183
(43) Veröffentlichungstag der Anmeldung: 23.02.2005
(73) Patentinhaber: ZF Lenksysteme GmbH, 73527 Schwäbisch Gmünd (DE)
(72) Erfinder: ERTLE, Peter, 73568 Durlangen (DE); SCHLEICHER, Christoph, 73568 Durlangen (DE)
(86) Internationale Anmeldenummer: PCT/EP2003/004380
(87) Internationale Veröffentlichungsnummer: WO 2003/097427

(56) Entgegenhaltungen:
- EP-A- 0 872 403
- DE-A- 19 811 917

## Beschreibung

Die Erfindung betrifft ein Zahnstangenlenkgetriebe mit einem Druckstück, das zum Andrücken einer Zahnstange und eines Ritzels gegeneinander in einen zylinderförmigen Aufnahmeraum einbringbar ist, mit den Merkmalen des Oberbegriffs des Anspruchs 1 bzw. 9. Ein derartiges Zahnstangen lenkgetriebe ist aus der Patentschrift EP-A-0 872 403 bekannt.

Bei einem Kraftfahrzeug steuert das Lenkrad die Ausrichtung der gelenkten Räder über ein Getriebe, das aus einem Ritzel besteht, welches fest mit der Lenksäule verbunden ist, und aus einer mit einer Verzahnung versehenen Querstange bzw. Zahnstange, welche die Ausrichtung der Achsen der beiden betroffenen Radnaben steuert. Um eine fehlerfreie Kupplung zu gewährleisten, werden die Zahnstange und das Ritzel mittels einem Druckstück gegeneinander gedrückt.

Die Andrückung muß dabei derart erfolgen bzw. das Druckstück muß derart ausgestaltet sein, daß eine Kupplung der Zahnstange und des Ritzels ohne Spiel der miteinander in Eingriff stehenden Zähne aufrecht erhalten werden kann. Dabei müssen Fehler hinsichtlich der Exzentrität des Ritzels, seines axialen Spiels und des Verschleißes von Zähnen berücksichtigt werden. Weiterhin muß der Mechanismus ohne Beschädigungen in der Lage sein, Stöße, die von einem Rad, das auf ein Hindernis trifft, stammen, zu ertragen.

Herkömmliche Druckstücke weisen eine schraubenförmige Feder auf und sind in einem Gehäuse, das im Regelfall auch die Zahnstange trägt; untergebracht. Die schraubenförmige Feder dient dazu, die Zahnstange gegen das Ritzel anzudrücken. Die Feder ist zwischen einem als Anschlag dienenden Zapfen bzw. Stopfen, der ihren Aufnahmeraum verschließt, und einem auf der Zahnstange verschieblich gelagerten Andrückelement, auf dem die Zahnstange gleitet, zusammengedrückt.

Das Andrückelement ist nach Art einer Gleitführung durch ein Führungselement geführt, das dieses in Richtung auf den Stopfen verlängert und sich an der Innenwand des Aufnahmeraumes abstützt.

Aus der DE 29 28 732 C2 ist ein Zahnstangenlenkgetriebe bekannt, das ein Druckstück aufweist, welches ein dickwandiges Stützteil und ein axial geschlitztes, dünnwandiges Führungsteil besitzt. Das Führungsteil wird durch ein Spreizelement, z.B. eine hutförmige Schenkelfeder, permanent gegen die Wandung des Gehäuses gedrückt. Dabei dient das Stützteil zur Erhöhung der Steifigkeit des Druckstückes, wodurch die von der Zahnstange ausgehenden Radialkräfte aufgenommen werden sollen. Der durch das Spreizelement belastete Führungsteil soll für eine Dämpfung der Hubbewegung des Druckstücks in beide Richtungen dienen.

In nachteilhafter Weise ist sowohl das vorbeschriebene Druckstück, wie auch das aus der DE 29 28 732 C2 bekannte Druckstück im Hinblick auf die Arbeitszeit und die Teile, die zur Montage notwendig sind, nicht ökonomisch. Nachteilhaft ist dabei außerdem, daß das Auffangen der Toleranzen, was durch eine mechanische Einstellung bei der Montage zu erfolgen hat, nicht zufriedenstellend erfolgen kann. Insbesondere gelingt es mit den bekannten Druckstücken nicht, die auftretenden Geräusche in einem wünschenswerten Maß zu unterdrükken. Darüber hinaus kann sich die Druckkraft des Druckstücks auf die Zahnstange im Laufe der Zeit verändern, wodurch die Lenkung entweder zu weich oder zu hart wird.

Aus der DE 198 11 917 A1 ist ein Druckstück zum Kuppeln einer Zahnstange gegen ein Ritzel bekannt, das zwei verschiedene Andrückstufen ausübt. Die Schwingungen und Stöße, die dazu neigen, die Zahnstange vom Ritzel zu entkoppeln und Geräusche verursachen, sollen durch die zweite Stufe des Andrucks verstärkt gedämpft werden. Hierzu wird zwischen dem Stopfen und dem Andrückelement eine Dämpfungsfeder eingesetzt, die zu einem Fließen in radialer Richtung neigt. Wenn sich das Andrückelement in Richtung auf den Stopfen zurückbewegt, wird die Dämpfungsfeder in axialer Richtung zusammengedrückt und beginnt in radialer Richtung zu fließen, d.h. in eine Richtung quer zur Einwirkung des Drucks auf die Feder. Der zylindrische Teil der Dämpfungsfeder verformt sich somit, indem er sich in radialer Richtung aufweitet, bis er die Innenfläche des zylindrischen Teiles der Führung des Andrückelementes erreicht. Von dem Moment an, in dem die Innenfläche der Führung erreicht ist, kann das Ausknicken praktisch nicht weiter auftreten und somit erhöht sich der Widerstand der Dämpfungsfeder gegen die axiale Kompression. Die Dämpfungsfeder stützt sich somit auf der Führung ab, um das Andrückelement zurückzustoßen, d.h. um die Rückstellkraft zu vergrößern. Dabei ist vorgesehen, daß die Führung als eine Art Umreifung der Dämpfungsfeder dient.

Die aus der DE 198 11 917 A1 bekannte Lösung ermöglicht zwar eine zweistufige Dämpfung, läßt jedoch im Hinblick auf eine besonders zuverlässige Unterdrückung von Geräuschen, insbesondere auch im Hinblick auf die sich im Laufe der Zeit verändernden Druckkräfte auf die Zahnstange, noch Raum für Verbesserungen.

Der vorliegenden Erfindung liegt daher die Aufgabe zugrunde, ein Druckstück für ein Zahnstangenlenkgetriebe so zu verbessern, daß dieses sehr gute Dämpfungseigenschaft bei geringer Abnützung aufweist und ein Auftreten von Geräuschen, insbesondere auch im Hinblick auf die sich im Laufe der Zeit verändernden Druckkräfte auf die Zahnstange weitgehend verhindert, wobei das Druckstück preisgünstig herstellbar und montierbar sein soll.

Diese Aufgabe wird erfindungsgemäß durch die Merkmale des Anspruchs 1 gelöst.

Erfindungsgemäß wird diese Aufgabe auch durch die Merkmale des Anspruchs 9 gelöst.

Dadurch, daß zwischen dem Anschlagstopfen und dem Andrückelement zur Anlage an der Zahnstange ein elastisches Element angeordnet ist, daß bei einer Bewegung des Andrückelementes in Richtung auf den Anschlagstopfen zum Ausweichen bzw. Ausdehnen in radialer Richtung neigt und dabei ein geschlitzte Führungselement aufspreizt, ergibt sich eine besonders vorteilhafte Dämpfung und eine hohe Stabilität. Dies resultiert daraus, daß bei einer Bewegung des Andrückelementes in Richtung auf den Anschlagstopfen, d.h. bei einer Komprimierung des elastischen Elementes, zusätzlich zu der Dämpfung in Axialrichtung des elastischen Elementes eine Dämpfung durch das Aufspreizen des Führungselementes gegen die Innenwand des Aufnahmeraumes, in dem das Druckstück angeordnet ist, erfolgt.

Bei der DE 198 11 917 A1 wird eine Erhöhung der Dämpfungseigenschaft bzw. eine zweistufige Dämpfung zwar ebenfalls durch ein radiales Fließen des elastischen Elementes erreicht, jedoch ist dabei vorgesehen, daß das Führungselement als Umreifung dient und somit das radiale Fließen des elastischen Elements begrenzt, so daß eine erhöhte Steifigkeit des elastischen Elements in Axialrichtung auftritt. Durch die Möglichkeit zum radialen Fließen weist das aus der DE 198 11 917 A1 bekannte Dämpfungsfeder somit vor einer Kontaktierung des Führungselementes eine reduzierte Dämpfungseigenschaft auf.

Im Unterschied dazu ist das Führungselement der erfindungsgemäßen Lösung partiell geschlitzt und aufspreizbar ausgebildet. Der Zweck des Führungselements in Kombination mit dem elastischen Element ist daher nicht eine Umreifung, um das radiale Fließen des elastischen Elements zur Erhöhung der Axialsteifigkeit zu beschränken, sondern das axiale Fließen wird dazu genutzt, das Führungselement aufzuspreizen und somit eine erhöhte Dämpfung durch die Aufspreizung des Führungselementes gegen die Innenwand des Aufnahmeraumes zu erreichen. Wie sich in Versuchen herausgestellt hat, ergibt sich daraus eine besonders hohe Stabilität und Dämpfung bei vollem Spielausgleich. Darüber hinaus hat sich gezeigt, daß durch die Kombination der Dämpfungseigenschaften des elastischen Elementes (in Axialrichtung) und der Dämpfungseigenschaften, die aus dem Aufspreizen des Führungselementes aufgrund der Spreizkräfte des elastischen Elementes resultieren, eine Druckkraft auf die Zahnstange erzeugbar ist, die sich im Laufe der Zeit nicht wesentlich verändert, wodurch die Lenkung die vorbestimmten Eigenschaften beibehält. Ein Auftreten von Geräuschen aufgrund zu großem Spiel ist somit praktisch ausgeschlossen. Auch Nachteile durch Verschleißerscheinungen der Zähne lassen sich durch die erfindungsgemäße Lösung vermeiden.

Von Vorteil ist es, wenn das Führungselement einstükkig mit dem Andrückbereich ausgebildet ist. In vorteilhafter Weise besteht das Druckstück somit aus wenigen Bauteilen und erfordert nur einen geringen Montageaufwand. In einer alternativen Ausführungsform kann das mit dem elastischen Element versehenen Druckstück auch ein von dem Andrückelement unabhängiges Führungselement aufweisen. Die vorteilhaften Dämpfungseigenschaften, d.h. die zweigeteilte Dämpfung sowohl in Axialrichtung des elastischen Elementes als auch durch das Aufspreizen des Führungselementes ist dadurch ebenfalls gegeben.

In einer Ausführungsform kann erfindungsgemäß vorgesehen sein, daß das elastische Element bereits im eingebauten Grundzustand, d.h. in einem von Stößen bzw. Bewegungen des Andrückelementes unbelasteten Zustand an dem Führungselement anliegt. Vorteilhaft ist dabei, daß bereits bei kleineren Stößen bzw. bei einer daraus resultierenden Komprimierung des elastischen Elementes eine Spreizkraft auf das Führungselement und somit ein beginnendes Aufspreizen des Führungselements gegen die Innenwand des Aufnahmeraumes erfolgt.

Vorteilhafte Ausgestaltungen und Weiterbildungen der Erfindung ergeben sich aus den weiteren Unteransprüchen und aus den nachfolgend anhand der Zeichnung prinzipmäßig dargestellten Ausführungsbeispielen.

Aus Anspruch 9 ergibt sich eine alternative erfindungsgemäße Lösung eines Druckstückes mit einem besonders einfachen Aufbau, der wenig Bauteile und somit einen besonders geringen Montageaufwand erfordert. Dabei ist vorgesehen, daß das Andrückelement in axialer Richtung geschlitzt ist, so daß ausgehend von einer der Zahnstangen zugewandten Außenfläche ein Spreizschlitz und zwei aufspreizbare Andrückhälften ausgebildet sind.

Des weiteren ist vorgesehen, daß das Andrückelement einen einstückig mit diesem ausgebildeten, partiell aufspreizbaren Führungsbereich aufweist. Dabei ist vorgesehen, daß der aufspreizbare Führungsbereich permanent gespreizt ist, so daß sich eine besonders hohe Stabilität bzw. eine Fixierung des Druckstückes in Relation zu der vorgesehenen Einbaulage in der Aufnahmebohrung ergibt. Im Unterschied zu dem aus der DE 29 28 732 C2 bekannten Druckstück ist keine zusätzliche Schenkelfeder zum Aufspreizen des Führungsbereichs notwendig.

Dadurch, daß der Andrückbereich in axialer Richtung geschlitzt ist, paßt sich dieser besonders vorteilhaft an die Zahnstange an.

Von der Zahnstange auftretende Stöße in Richtung auf den Anschlagstopfen werden zum einen durch eine gewissen Aufweitung der beiden durch den Spreizschlitz geteilten Andrückhälften aufgenommen, zum anderen dient eine zwischen dem Andrückelement und dem Anschlagstopfen angeordnete Feder zur Aufnahme dieser Kräfte und Stöße bzw. zu deren Dämpfung.

Durch den Spreizschlitz in dem Andrückelement, durch den die beiden Andrückhälften gebildet werden, ist auch eine Aufspreizung dieser Andrückhälften derart möglich, daß eine Spreizverbindung zwischen diesen und der Innenwand des Aufnahmeraumes möglich ist. Analog zu dem aufspreizbaren Führungselement wird somit auch in diesem Bereich eine Spreizverbindung, wie bereits vorstehend prinzipiell beschrieben, erzeugt.

Erfindungsgemäß kann vorgesehen sein, daß der Führungsbereich eine Außendurchmessererweiterung, vorzugsweise eine Wulst, aufweist.

Durch eine Ausgestaltung des Führungsbereiches mit einer Wulst ergibt sich in einfacher Weise eine besonders hohe Stabilität des Druckstückes in dem Aufnahmeraum.

Vorteilhafte Ausgestaltungen und Weiterbildungen der erfindungsgemäßen Lösung gemäß Anspruch 9 ergeben sich ebenfalls aus den nachfolgend anhand der Zeichnung prinzipmäßig dargestellten Ausführungsbeispielen.

Vorteilhafte Lösungen sind für beide erfindungsgemäße Ausgestaltungen möglich bzw. übertragbar.

Es zeigt:
- Fig. 1: ein erfindungsgemäßes Druckstück mit einem elastischen Element im Grundzustand im Aufnahmeraum;
- Fig. 2: ein erfindungsgemäßes Druckstück gemäß Fig. 1 im belasteten Zustand im Aufnahmeraum; und
- Fig. 3: eine alternative Ausgestaltung des Druckstückes gemäß Anspruch 9 mit zwei Andrückhälften und einem einstückig mit dem Andrückelement ausgebildeten Führungsbereich.

Zahnstangenlenkgetriebe, insbesondere für Kraftfahrzeuge, mit Druckstücken 1 zum Kuppeln einer Zahnstange 2 gegen ein Ritzel sind bereits hinlänglich aus der Praxis bekannt, wozu auf die DE 29 28 732 C2 und die DE 198 11 917 A1 verwiesen wird. Nachfolgend wird deshalb lediglich auf die für die Erfindung relevanten Merkmale näher eingegangen. Aus dem Stand der Technik und aus den genannten Patentpublikationen ist auch das Grundprinzip eines derartigen Kupplungsmechanismus für eine Zahnstange 2 und deren Antriebsritzel hinlänglich bekannt.

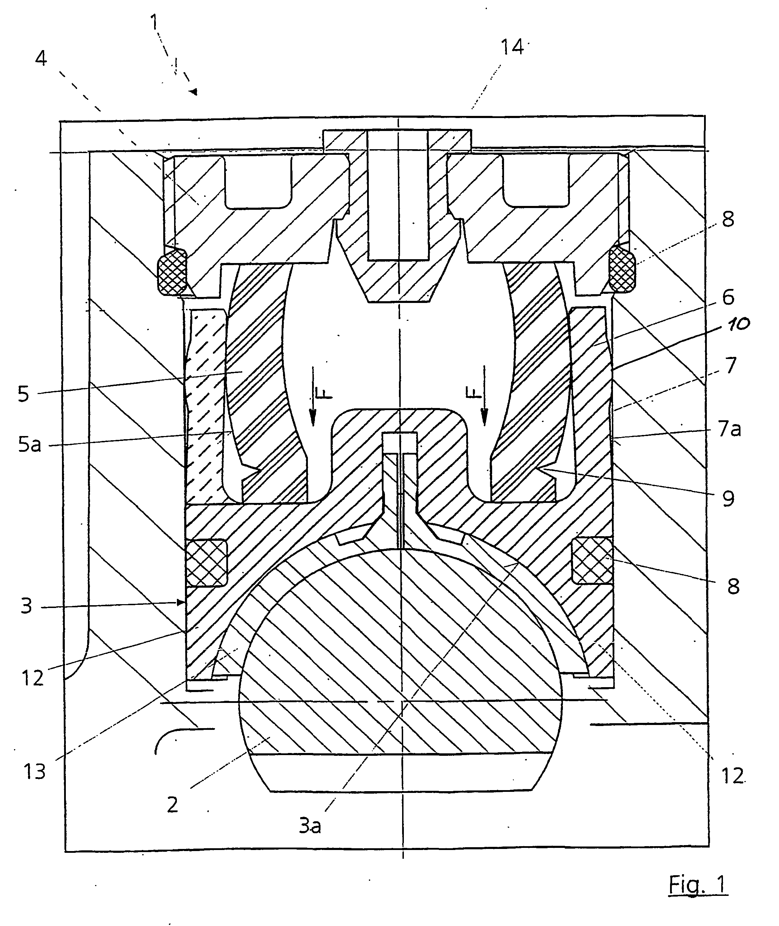

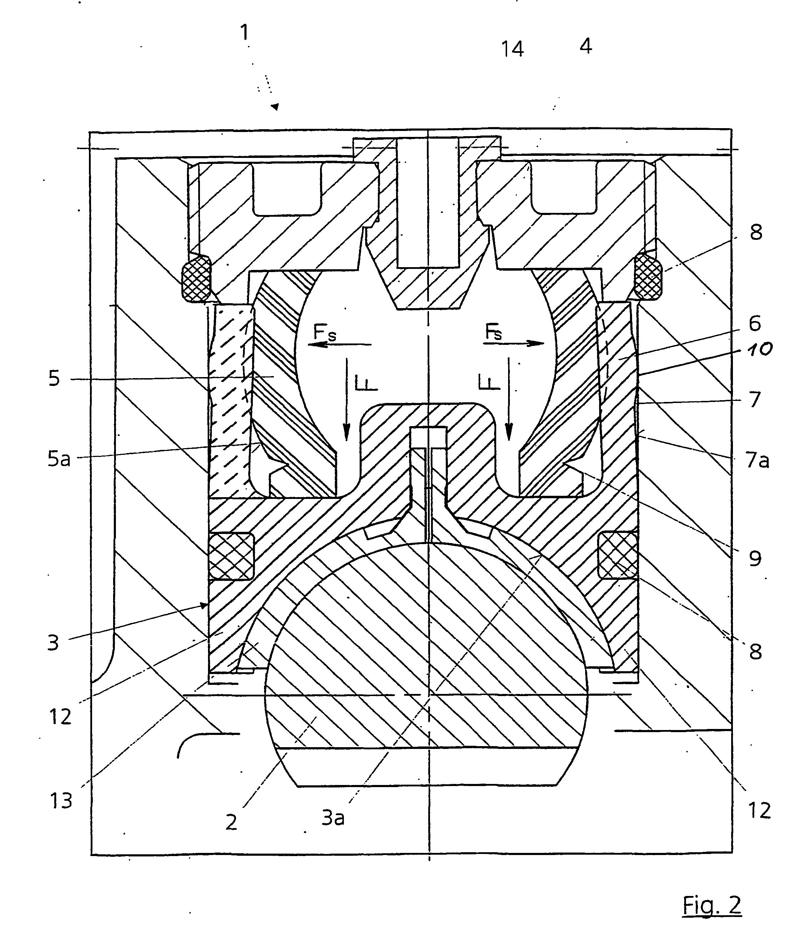

Wie aus Fig. 1 ersichtlich ist, weist das Druckstück 1 ein Andrückelement 3 sowie einen Anschlagstopfen 4 auf, zwischen denen ein elastisches Element 5 angeordnet ist. Das elastische Element 5 wird an seiner Außenseite 5a von einem Führungselement 6 umgeben. Das Führungselement 6 ist in dem dargestellten Ausführungsbeispiel einstückig mit dem Andrückelement 3 ausgebildet. Wie sich anhand der Schraffierung in den Figuren 1 und 2 erkennen läßt, ist das Führungselement 6 geschlitzt ausgebildet. Die geschlitzte Ausgestaltung des Führungselementes 6 ermöglicht ein Aufspreizen des Führungselementes 6 bei einem entsprechenden Druck durch das elastische Element 5. Das Druckstück 1 mit seinem Andrückelement 3, dem Anschlagstopfen 4, dem elastischen Element 5 und dem Führungselement 6 wird, wie aus den Figuren 1 und 2 ersichtlich ist, in einen Aufnahmeraum 7 eines nicht näher dargestellten Gehäuses eingesetzt. Das Gehäuse trägt dabei im allgemeinen auch die Zahnstange 2.

Wie sich ebenfalls aus den Figuren 1 und 2 ergibt, erstreckt sich das Führungselement 6 entlang der zylindrischen Innenwandung 7a des Aufnahmeraumes 7. Der Anschlagstopfen 4 ist mit dem Aufnahmeraum 7 fest verbindbar und beispielsweise mittels eines Gewindes in diesen einschraubbar.

Das elastische Element 5 ist praktisch in einem Innenraum des Druckstückes 1 angeordnet, der durch das Andrückelement 3, den Anschlagstopfen 4 und das Führungselement 6 begrenzt wird. Zur dichten Verbindung des Druckstückes 1 mit dem Aufnahmeraum 7 ist jeweils im Bereich des Anschlagstopfens 4 und des Andrückelementes 3 ein O-Ring 8 angeordnet.

Bei einer Bewegung des Andrückelementes 3 in Richtung auf den Anschlagstopfen 4 bzw. bei einer Kompression neigt das elastische Element 5 zum Ausweichen bzw. Fließen in radialer Richtung. Unterstützt werden kann dies durch einen leicht gekrümmten Einbau des elastischen Elementes 5, wie er sich aus Fig. 1 ergibt. Zusätzlich kann das radiale Fließen auch durch eine Einkerbung 9 in dem elastischen Element 5 unterstützt werden. Die Einkerbung 9 ist, wie aus Fig. 1 und Fig. 2 ersichtlich, in vorteilhafter Weise im Bereich des Andrückelementes 3 in dem elastischen Element 5 an dessen Außenseite 5a eingebracht. Im Ausgangszustand, d.h. in einem durch Stöße bzw. Bewegungen der Zahnstange 2 unbelasteten Zustand des Druckstückes 1, ist ein Spiel, wie aus Fig. 1 ersichtlich, zwischen dem Führungselement 6 und dem Anschlagstopfen 4 vorhanden. Der Grundzustand bzw. unbelastete Zustand des Druckstückes 1 ist nicht zwangsläufig gleichbedeutend mit einer völligen Entspannung des elastischen Elementes 5, vielmehr mag es vorteilhaft erscheinen, das elastische Element 5 auch in diesem Grund- bzw. Ausgangszustand mit einer gewissen Grundkomprimierung bzw. Belastung zu belegen.

Bei einer durch die Zahnstange 2 auftretenden Komprimierung drückt das elastische Element 5 auf das Führungselement 6, so daß dieses in Richtung auf die Innenwandung 7a aufspreizt und die Bewegung des Andrükkelementes 3 auf den Anschlagstopfen 4 verlangsamt bzw. stoppt.

Fig. 2 zeigt eine hohe Belastung des Druckstücks 1, bei der das Spiel zwischen dem Führungselement 6 und dem Anschlagstopfen 4 nahezu vollständig aufgebraucht wurde. Mit einer entsprechend hohen (und definierbaren) Kraft (Fₛ) presst dabei das elastische Element 5 auf das Führungselement 6 und spreizt dieses zur Dämpfung auseinander. Wie aus Fig. 2 ersichtlich ist, baucht das elastische Element 5 hierfür entsprechend aus.

In dem dargestellten Ausführungsbeispiel ist vorgesehen, daß das elastische Element 5 auch axiale Dämpfungseigenschaften, unabhängig von der Spreizkraft auf das Führungselement 6, aufweist. Unter axialen Dämpfungseigenschaften sind dabei herkömmliche Dämpfungseigenschaften in Axialrichtung des elastischen Elementes 5 zu verstehen. Das elastische Element 5 kann dabei frequenzabhängig verschiedene Dämpfungseigenschaften aufweisen. Hierzu hat es sich als vorteilhaft herausgestellt, wenn bei einer langsamen Bewegung des Andrückelementes 3 in Richtung auf den Anschlagstopfen 4 geringe Dämpfungskräfte und bei einer schlagartigen Bewegung hohe Dämpfungskräfte vorhanden sind. Das elastische Element 5 kann in beide Bewegungsrichtungen gleiche Dämpfungseigenschaften besitzen. Als vorteilhaft hat es sich dabei auch herausgestellt, wenn das elastische Element 5 eine eigene Federkraft aufweist, wodurch die seitherige Feder (in Fig. 1 und Fig. 2 deshalb nicht mehr dargestellt) entfällt oder alternativ schwächer ausgelegt werden kann.

Das elastische Element 5 kann auch derart ausgestaltet sein, daß eine temperaturabhängige Dämpfung, z.B. eine gesteuerte Dämpfung durch das Anlegen einer elektrischen Spannung an spezielles Material, möglich ist. Vorstellbar ist dabei außerdem eine Kombination des elastischen Elementes 5 mit einer Art Hydrolager, d.h. einer hydraulischen Dämpfung (nicht dargestellt), die ebenfalls variabel oder steuerbar ausgelegt sein kann.

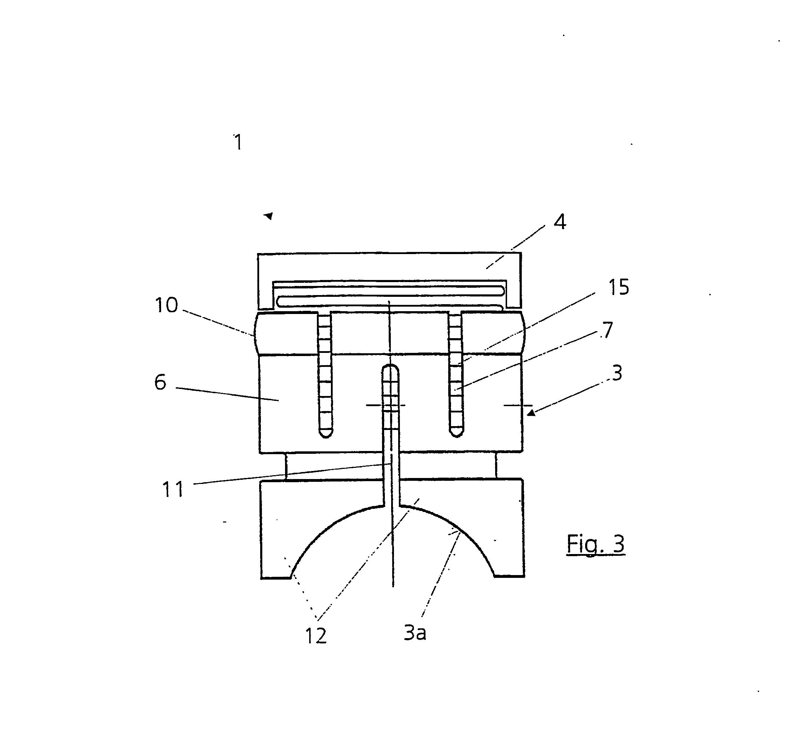

In nicht dargestellter Weise kann zur Erhöhung der Stabilität auch vorgesehen sein, daß das Führungselement 6 bzw. das Andrückelement 3 eine wie in Fig. 3 dargestellte Außendurchmessererweiterung 10 aufweist. In dem vorliegenden Ausführungsbeispiel ist die Außendurchmessererweiterung in Fig. 3 als Wulst 10 dargestellt. Ebenfalls in Fig. 3 dargestellt ist ein Spreizschlitz 11, der in axialer Richtung in das Andrückelement 3 eingebracht ist, so daß ausgehend von einer der Zahnstange 2 zugewandten Außenfläche 3a zwei Andrückhälften 12 ausgebildet sind. Der in Fig. 3 dargestellte Spreizschlitz 11 und seine Funktionsweise können dabei auch auf das in Fig. 1 und Fig. 2 dargestellte Ausführungsbeispiel übertragen werden.

Fig. 1 und Fig. 2 zeigen in bekannter Weise eine Druckstückfolie 13, die auch als Gleitlagerfolie bezeichnet wird. Des weiteren zeigen die Figuren 1 und 2 einen Stopfen 14 in dem Anschlagstopfen 4, der zum Abdichten nach einer Meßtasterprüfung vorgesehen ist. Mit der Meßtasterprüfung soll geprüft werden, ob der Anschlagstopfen 4 korrekt in den Aufnahmeraum 7 eingeschraubt ist bzw. ob die vorgegebenen Abstände eingehalten wurden.

In Versuchen hat es sich als besonders geeignet herausgestellt, das elastische Element 5 aus einem Hochleistungs-Dämpferelement aus Kunststoff, insbesondere dem TecsPak®, einem speziellen CO-Polyester-Elastomer der Möller Miner GmbH, Delbrück, herzustellen. Dadurch ist eines besonders gute Absorption kritischer Stoßenergien gewährleistet.

Fig. 3 zeigt ein Druckstück 1 in einer alternativen Ausführung gemäß Anspruch 9. Das Andrückelement 3 ist dabei einstückig mit einem Führungsbereich 6, der in Bezug auf Fig. 1 und Fig. 2 dem Führungselement 6 entspricht, ausgebildet. Das Andrückelement 3 weist, wie bereits beschrieben, einen Spreizschlitz 11 auf, der das Andrückelement 3 in zwei Andrückhälften 12 teilt. Außerdem ist zur Erhöhung der Stabilität eine Wulst 10 vorgesehen. Die Wulst 10 befindet sich dabei im oberen Bereich des Führungsbereiches 6, d.h. an der von der Zahnstange 2 abgewandten Seite. Der Führungsbereich 6 ist partiell geschlitzt und aufgespreizt. Die Aufspreizung bzw. der Andruck des Führungsbereiches 6 an eine in Fig. 3 nicht dargestellte Innenwandung 7a des Aufnahmeraumes 7 wird dabei durch die Wulst 10 verstärkt. Wenn das Druckstück 1 mit dem in Fig. 3 dargestellten Andrückelement 3 in einen Aufnahmeraum 7 eingesetzt wird, findet somit eine permanente Wirkverbindung zwischen der Innenwand 7a und dem Führungsbereich 6 bzw. der Wulst 10 statt. Alternativ zu dem Wulst 10 kann der Führungsbereich 6 auch kegelförmig aufgeweitet sein. Dies gilt für alle Ausführungsformen.

Vorgesehen ist dabei, daß analog zu dem in Fig. 1 und Fig. 2 dargestellten Druckstück 1 anstelle des elastischen Elementes 5 eine Feder 15 eingesetzt wird. Mittels dem Anschlagstopfen 4 wird somit eine entsprechende axiale Dämpfung zusätzlich zu der Dämpfung durch die Aufspreizung des Führungsbereiches 6 erzielt. Vorgesehen sein kann auch, daß sowohl eine Feder 15 als auch ein elastisches Element 5 eingesetzt wird.

Das in Fig. 3 dargestellte Andrückelement 3 stellt einen Teil eines besonders einfach und kostengünstig herstellbaren Druckstückes 1 dar. Da es sich bei Druckstücken 1 für Zahnstangenlenkgetriebe um Serienteile mit hohen Stückzahlen handelt, ist eine einfache und kostengünstige Ausgestaltung, die darüber hinaus eine leichte Montage gewährleistet, besonders bedeutsam.

### Bezugszeichen

- 1: Druckstück
- 2: Zahnstange
- 3: Andrückelement
- 3a: Außenfläche
- 4: Anschlagstopfen
- 5: elastisches Element
- 5a: Außenseite
- 6: Führungselement/Führungsbereich
- 7: Aufnahmeraum
- 7a: Innenwandung
- 8: O-Ring
- 9: Einkerbung
- 10: Außendurchmessererweiterung (Wulst)
- 11: Spreizschlitz
- 12: Andrückhälften
- 13: Druckstückfolie
- 14: Stopfen
- 15: Feder

## Patentansprüche

1. Zahnstangenlenkgetriebe mit einem Druckstück (1), das zum Andrücken einer Zahnstange (2) und eines Ritzels gegeneinander in einen zylinderförmigen Aufnahmeraum (7) einbringbar ist, wobei das Druckstück (1) folgende Merkmale aufweist:
- ein Andrückelement (3) zur Anlage an der Zahnstange (2),
- ein Führungselement (6), das partiell geschlitzt und aufspreizbar ausgebildet ist und sich entlang der zylindrischen Innenwandung (7a) des Aufnahmeraumes (7) erstreckt,
- einen Anschlagstopfen (4), der mit dem Aufnahmeraum (7) fest verbindbar ist,
- ein zwischen dem Anschlagstopfen (4) und dem Andrückelement (3) angeordnetes elastisches Element (5), das an seiner der Innenwandung (7a) des Aufnahmeraums (7) zugewandten Außenseite (5a) von dem Führungselement (6) umgeben ist, **dadurch gekennzeichnet, daß** das elastische Element (5) bei einer Bewegung des Andrückelementes (3) in Richtung auf den Anschlagstopfen (4) bzw. bei einer Komprimierung zum Ausweichen bzw. Ausdehnen in radialer Richtung neigt und **dadurch** das Führungselement (6) gegen den Aufnahmeraum (7) aufspreizt.

2. Zahnstangenlenkgetriebe nach Anspruch 1,
**dadurch gekennzeichnet, daß**
das elastische Element (5) bei einer Komprimierung ausbaucht.

3. Zahnstangenlenkgetriebe nach Anspruch 1 oder 2,
**dadurch gekennzeichnet, daß**
das elastische Element (5) Dämpfungseigenschaften aufweist.

4. Zahnstangenlenkgetriebe nach Anspruch 3,
**dadurch gekennzeichnet, daß**
das elastische Element (5) frequenzabhängig verschiedene Dämpfungseigenschaften aufweist.

5. Zahnstangenlenkgetriebe nach Anspruch 3 oder 4,
**dadurch gekennzeichnet, daß**
das elastische Element (5) federkraftähnliche Dämpfungseigenschaften aufweist.

6. Zahnstangenlenkgetriebe nach Anspruch 3, 4 oder 5,
**dadurch gekennzeichnet, daß**
die Dämpfungseigenschaften des elastischen Elements (5) temperaturabhängig, vorzugsweise durch die Anlage eines elektrischen Stromes, steuerbar sind.

7. Zahnstangenlenkgetriebe nach einem der Ansprüche 1 bis 6,
**dadurch gekennzeichnet, daß**
das Führungselement (6) eine Außendurchmessererweiterung (10), vorzugsweise eine Wulst, aufweist.

8. Zahnstangenlenkgetriebe nach einem der Ansprüche 1 bis 7,
**dadurch gekennzeichnet, daß**
das Andrückelement (3) in axialer Richtung einen Spreizschlitz (11) aufweist, so daß ausgehend von einer der Zahnstange (2) zugewandten Außenfläche (3a) zwei aufspreizbare Andrückhälften (12) ausgebildet sind.

9. Zahnstangenlenkgetriebe mit einem Druckstück (1), das zum Andrücken einer Zahnstange (2) und eines Ritzels gegeneinander in einen zylinderförmigen Aufnahmeraum (7) einbringbar ist, wobei das Druckstück (1) folgende Merkmale aufweist:
- ein Andrückelement (3) zur Anlage an der Zahnstange (2), wobei das Andrückelement (3) in axialer Richtung einen Spreizschlitz (11) aufweist, so daß ausgehend von einer der Zahnstange (2) zugewandten Außenfläche (3a) zwei aufspreizbare Andrückhälften (12) ausgebildet sind, und
- einen partiell geschlitzten und aufgespreizten Führungsbereich (6) aufweist, der einstückig mit dem Andrückelement (3) ausgebildet ist, wobei sich der Führungsbereich (6) entlang der zylindrischen Innenwand (7a) des Aufnahmeraumes (7) erstreckt,
- ein Anschlagstopfen (4), der mit dem Aufnahmeraum (7) fest verbindbar ist, und
- eine zwischen dem Anschlagstopfen (4) und dem Andrückelement (3) angeordnete Feder (15) bzw. ein elastisches Element (5), **dadurch gekennzeichnet, daß** der Führungsbereich (6) mit einer Außendurch messererweiterung (10), vorzugzweise einer Wulst und/oder einer kegelförmigen Ausweitung ausgestattet ist.

## Claims

1. Rack and pinion steering mechanism having a pressure piece (1), which pressure piece (1) can be introduced into a cylindrical accommodating space (7) in order to press a rack (2) and a pinion against one another, the pressure piece (1) having the following features:
- a pressure element (3) for resting on the rack (2),
- a guide element (6) which is configured so as to have a partial slot and be spreadable and extends along the cylindrical inner wall (7a) of the accommodating space (7),
- a stop plug (4) which can be connected fixedly to the accommodating space (7),
- an elastic element (5) which is arranged between the stop plug (4) and the pressure element (3) and is surrounded by the guide element (6) at its outer side (5a) facing the inner wall (7a) of the accommodating space (7), **characterized in that** the elastic element (5) tends to yield or expand in the radial direction in the event of a movement of the pressure element (3) in the direction of the stop plug (4) or in the event of a compression, and the guide element (6) spreads open against the accommodating space (7) as a result.

2. Rack and pinion steering mechanism according to Claim 1, **characterized in that** the elastic element (5) bulges in the event of a compression.

3. Rack and pinion steering mechanism according to Claim 1 or 2, **characterized in that** the elastic element (5) has damping properties.

4. Rack and pinion steering mechanism according to Claim 3, **characterized in that** the elastic element (5) has damping properties which are different as a function of the frequency.

5. Rack and pinion steering mechanism according to Claim 3 or 4, **characterized in that** the elastic element (5) has damping properties which are similar to spring force.

6. Rack and pinion steering mechanism according to Claim 3, 4 or 5, **characterized in that** the damping properties of the elastic element (5) can be controlled as a function of the temperature, preferably by applying an electric current.

7. Rack and pinion steering mechanism according to one of Claims 1 to 6, **characterized in that** the guide element (6) has an outside diameter enlargement (10), preferably a bead.

8. Rack and pinion steering mechanism according to one of Claims 1 to 7, **characterized in that** the pressure element (3) has a spreading slot (11) in the axial direction, so that two spreadable pressure halves (12) are formed starting from an outer face (3a) facing the rack (2).

9. Rack and pinion steering mechanism having a pressure piece (1), which pressure piece (1) can be introduced into a cylindrical accommodating space (7) in order to press a rack (2) and a pinion against one another, the pressure piece (1) having the following features:
- a pressure element (3) for resting on the rack (2), the pressure element (3) having a spreading slot (11) in the axial direction, so that two spreadable pressure halves (12) are formed starting from an outer face (3a) facing the rack (2), and
- having a guide region (6) which is partially slit and spread open and is integrally formed with the pressure element (3), the guide region (6) extending along the cylindrical inner wall (7a) of the accommodating space (7),
- a stop plug (4) which can be connected fixedly to the accommodating space (7), and
- an elastic element (5) or a spring (15) which is arranged between the stop plug (4) and the pressure element (3), **characterized in that** the guide region (6) is equipped with an outside diameter enlargement (10), preferably a bead and/or a conical widened portion.

## Revendications

1. Direction à crémaillère comprenant une pièce de pression (1), qui peut être montée pour presser une crémaillère (2) et un pignon l'un contre l'autre dans un espace de réception de forme cylindrique (7), la pièce de pression (1) présentant les caractéristiques suivantes :
- un élément de pression (3) destiné à s'appliquer contre la crémaillère (2),
- un élément de guidage (6), qui est partiellement fendu et qui est réalisé de manière à pouvoir être écarté, et qui s'étend le long de la paroi interne cylindrique (7a) de l'espace de réception (7),
- un bouchon d'arrêt (4), qui peut être connecté fixement à l'espace de réception (7),
- un élément élastique (5) disposé entre le bouchon d'arrêt (4) et l'élément de pression (3), lequel est entouré au niveau de son côté extérieur (5a) tourné vers la paroi interne (7a) de l'espace de réception (7) par l'élément de guidage (6),
**caractérisé en ce que** l'élément élastique (5), en cas de déplacement de l'élément de pression (3) dans la direction du bouchon d'arrêt (4) ou en cas d'une compression, a tendance à s'écarter ou à s'étirer dans la direction radiale et écarte de ce fait l'élément de guidage (6) contre l'espace de réception (7).

2. Direction à crémaillère selon la revendication 1,
**caractérisée en ce que**
l'élément élastique (5) se bombe sous l'effet d'une compression.

3. Direction assistée à crémaillère selon la revendication 1 ou 2,
**caractérisée en ce que**
l'élément élastique (5) présente des propriétés d'amortissement.

4. Direction assistée à crémaillère selon la revendication 3,
**caractérisée en ce que**
l'élément élastique (5) présente des propriétés d'amortissement différentes en fonction de la fréquence.

5. Direction assistée à crémaillère selon la revendication 3 ou 4,
**caractérisée en ce que**
l'élément élastique (5) présente des propriétés d'amortissement similaires à la force d'un ressort.

6. Direction assistée à crémaillère selon la revendication 3, 4 ou 5,
**caractérisée en ce que**
les propriétés d'amortissement de l'élément élastique (5) peuvent être commandées en fonction de la température, de préférence par l'application d'un courant électrique.

7. Direction assistée à crémaillère selon l'une quelconque des revendications 1 à 6,
**caractérisée en ce que**
l'élément de guidage (6) présente un élargissement de diamètre extérieur (10), de préférence un bourrelet.

8. Direction assistée à crémaillère selon l'une quelconque des revendications 1 à 7,
**caractérisée en ce que**
l'élément de pression (3) présente dans la direction axiale une fente d'écartement (11), de sorte qu'à partir d'une surface extérieure (3a) tournée vers la crémaillère (2), deux moitiés de pression (12) pouvant être écartées soient réalisées.

9. Direction assistée à crémaillère comprenant une pièce de pression (1), qui peut être montée pour presser une crémaillère (2) et un pignon l'un contre l'autre dans un espace de réception de forme cylindrique (7), la pièce de pression (1) présentant les caractéristiques suivantes :
- un élément de pression (3) destiné à s'appliquer contre la crémaillère (2), l'élément de pression (3) présentant dans la direction axiale une fente d'écartement (11), de sorte qu'à partir d'une surface extérieure (3a) tournée vers la crémaillère (2), deux moitiés de pression (12) pouvant être écartées soient réalisées, et
- présente une région de guidage (6) partiellement fendue et écartée, qui est réalisée d'une seule pièce avec l'élément de pression (3), la région de guidage (6) s'étendant le long de la paroi interne cylindrique (7a) de l'espace de réception (7),
- un bouchon d'arrêt (4), qui peut être connecté fixement à l'espace de réception (7), et
- un ressort (15) disposé entre le bouchon d'arrêt (4) et l'élément de pression (3), ou un élément élastique (5),
**caractérisé en ce que** la région de guidage (6) est pourvue d'un élargissement de diamètre extérieur (10), de préférence d'un bourrelet et/ou d'un élargissement de forme conique.
